# DEMANDE DE BREVET EUROPEEN

(11) **EP 1 111 280 A1**
(43) Date de publication de la demande: **27.06.2001**
(21) Numéro de dépôt: 99870273.2
(22) Date de dépôt: 21.12.1999
(51) Int. Cl.: F16K 5/06, F16K 1/46

(54) **Vanne comprenant un joint d'etancheite**

(71) Demandeur: Techspace Aero S.A., 4041 Herstal (BE)
(72) Inventeur: Delobel, Pierre, 4031 Angleur (BE); Dubuisson, Raymond, 4801 Stembert (BE); Pierson, Michel, 4470 Saint-Georges (BE)
(74) Mandataire: Van Malderen, Joelle

(57) **Abrégé**

Vanne (1) comprenant un joint d'étanchéité (6,16) disposé sur un support (3,10), caractérisée en ce que le joint (6,16) est maintenu dans un épaulement (14) dimensionné de manière à permettre un jeu axial (α) et/ou radial (β) dudit joint (6,16) lors de son positionnement sur le support (3,10) lorsque la vanne (1) est ouverte.

## Description

### Objet de l'invention

La présente invention se rapporte à une vanne comprenant un joint d'étanchéité présent sur un support mobile ou fixe telle qu'une vanne à boisseau ou une vanne à clapet.

### Etat de la technique

Beaucoup d'équipements utilisés dans l'aéronautique et dans l'aérospatial sont des systèmes pneumatiques ou hydrauliques utilisant des vannes présentant un joint d'étanchéité disposé sur un support éventuellement mobile. Un exemple connu de telles vannes est la vanne à boisseau sphérique, qui comprend essentiellement un corps de vanne dans lequel un obturateur se présentant sous la forme d'une calotte sphérique munie d'un passage est actionné. Habituellement, un joint est fixé de manière rigide sur le support éventuellement mobile à l'arrière ou à l'avant du boisseau et permet d'assurer ainsi l'étanchéité de l'amont de la vanne vis-à-vis de l'aval de celle-ci lorsque la vanne est fermée.

Lors de la fermeture de la vanne, le joint entre en contact avec ladite surface de contact sphérique du boisseau. On observe malheureusement qu'il n'y a pas toujours un bon alignement dudit joint d'étanchéité avec cette surface de contact.

Un autre exemple d'une vanne connue est la vanne à clapet, qui comprend un clapet se présentant essentiellement sous la forme d'un plateau mobile muni d'un joint d'étanchéité sur sa face active. Ce joint est solidaire du plateau et y est fixé de manière rigide. A nouveau, il permet d'assurer l'étanchéité de l'amont de la vanne vis-à-vis de l'aval de celle-ci lors de la fermeture de la vanne.

Habituellement, les joints d'étanchéité sont réalisés dans un matériau choisi parmi des matériaux qui présentent une importante capacité à se déformer, tels les matières élastomères et polymères, ce qui permet de compenser ou au moins de minimiser les effets des défauts d'alignement des diverses pièces entrant en contact. Néanmoins, dans le cas particulier de vannes utilisées dans des conditions extrêmes comme les températures cryogéniques, les températures particulièrement élevées ou encore dans le cas d'une utilisation de fluides particulièrement agressifs, on impose l'utilisation de joints présentant des tolérances nettement plus faibles à la déformation. Notamment, on peut citer l'exemple de joints en polymères dont la dureté augmente sensiblement lorsque la température diminue pour une application à des températures cryogéniques. De même, on est obligé d'utiliser des joints métalliques ou céramiques dans le cas d'une application à des températures particulièrement élevées ou en présence de fluides particulièrement agressifs.

Les tolérances à la déformation étant fortement diminuées, il est nécessaire de proposer des vannes qui présentent des assemblages particulièrement précis et donc particulièrement coûteux, et également assez sensibles aux perturbations. On assure ainsi un bon alignement des pièces lors de la fermeture de la vanne, même dans des conditions extrêmes.

### Buts de l'invention

La présente invention vise à proposer une solution qui permette d'utiliser des joints, même présentant une dureté élevée, tels les joints métalliques ou céramiques, dans le cas d'une utilisation dans des conditions extrêmes.

La présente invention vise aussi à proposer une solution qui permette de s'affranchir du problème du parfait alignement des différentes pièces lors de la fermeture de la vanne.

### Principaux éléments caractéristiques de l'invention

La présente invention a pour objet une vanne comprenant un joint d'étanchéité disposé sur un support fixe ou mobile, caractérisée en ce que le joint est maintenu dans un épaulement dimensionné de manière à permettre un jeu axial et/ou radial dudit joint lors de son positionnement sur le support lorsque la vanne est ouverte.

Le fait de prévoir un jeu radial et/ou axial permettra un déplacement dudit joint sur la surface de contact, et ainsi un auto-centrage dudit joint, lors de la fermeture de la vanne.

Ceci permet de manière particulièrement avantageuse de s'affranchir du problème de l'alignement entre les différentes pièces qui entrent en contact lors de la fermeture de la vanne.

Selon un première forme d'exécution particulièrement préférée, la vanne est une vanne à boisseau sphérique dans laquelle le joint est maintenu dans un épaulement présent dans le support. Dans le cas où le support est mobile, un jeu radial et un jeu axial sont prévus afin de permettre au joint de s'auto-centrer sur la surface de contact sphérique du boisseau en se déplaçant parallèlement à la surface plane du support mobile lors de la fermeture de ladite vanne. Ceci se produira même si les différentes pièces ne sont pas parfaitement alignées. Il en est de même lorsque le support est fixe, hormis le fait qu'il y a seulement un jeu radial permettant au joint de s'auto-centrer sur la surface de contact sphérique du boisseau, lors de la fermeture de la vanne.

Selon une seconde forme d'exécution particulièrement préférée, la vanne est une vanne à clapet dans laquelle le joint est maintenu dans un épaulement présent sur ce clapet. Un jeu axial et un jeu radial sont prévus afin de permettre au joint de s'auto-centrer sur la surface de contact conique du siège la vanne, en se déplaçant parallèlement à la surface plane dudit support mobile lors de la fermeture de ladite vanne. Ceci se produira même si les différentes pièces ne sont pas parfaitement alignées.

Ceci permet l'utilisation de toutes sortes de joints, y compris les joints en polymères à faible coefficient de déformation, les joints métalliques ou céramiques. Ceci autorise donc de manière particulièrement avantageuse l'utilisation de vannes présentant les caractéristiques susmentionnées dans des conditions extrêmes telles que températures extrêmement basses (températures cryogéniques), températures particulièrement élevées, pressions élevées ou très élevées ou encore lors de l'utilisation de fluides agressifs. En effet, le joint n'étant pas serré dans l'épaulement, il présente l'avantage, contrairement aux joints en polymère fixés de manière rigide, de n'être pas soumis à certaines contraintes ni à certaines déformations. En outre, les différences importantes de dilatation entre le joint et les pièces métalliques voisines sont également autorisées lorsque la vanne est soumise à d'importantes différences de températures. En effet, dans ces conditions, le joint de la vanne selon la présente invention, contrairement aux joints fixés de manière rigide selon l'état de la technique, peut se dilater librement.

### Brève description des dessins

La figure 1 représente une vue schématique en coupe d'une vanne à boisseau utilisée selon une première forme d'exécution préférée de la présente invention.

La figure 2 représente une vue de détail du support sur lequel est fixé de manière rigide un joint selon la solution de l'état de la technique.

Les figures 3a et 3b représentent deux vues de détail, respectivement en position ouverte (figure 3a) et fermée (figure 3b), d'une vanne à boisseau telle que représentée à la figure 1 et présentant un support mobile maintenant un joint selon la solution de la présente invention.

La figure 4 représente une vue schématique en coupe d'une vanne à clapet selon une seconde forme d'exécution préférée de la présente invention.

Les figures 5a et 5b représentent deux vues de détail, respectivement en position ouverte (figure 5a) et fermée (figure 5b), d'une vanne à clapet telle que représentée à la figure 4 et présentant un support mobile maintenant un joint selon la solution de la présente invention.

### Description de deux formes d'exécution préférées de la présente invention

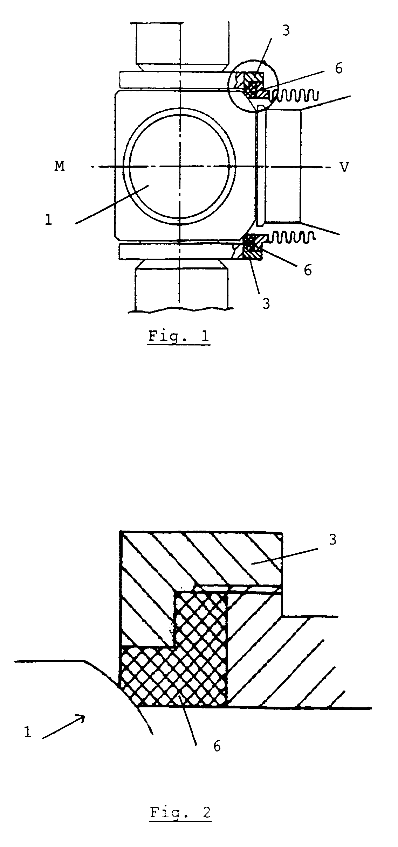

Selon une première forme préférée de l'invention, la vanne est une vanne à boisseau sphérique telle que représentée à la figure 1. Cette vanne permet de régler par la rotation de l'obturateur sous forme de boisseau 1 l'écoulement du fluide entre la partie amont M et la partie aval V d'un conduit d'écoulement.

Un support 3 sur lequel est placé un joint 6 est disposé à l'arrière du boisseau sphérique 1 afin d'assurer l'étanchéité de l'amont M de la vanne vis-à-vis de l'aval V de celle-ci lorsque la vanne est fermée.

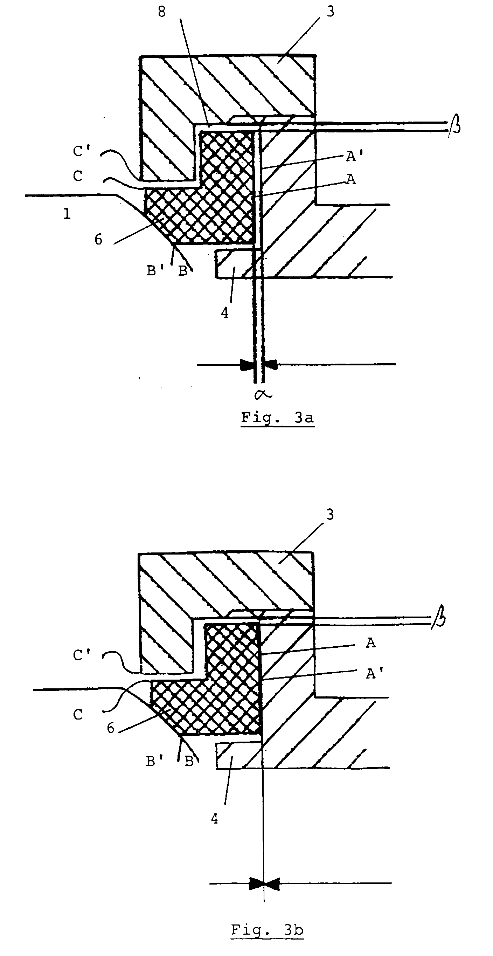

Selon la solution de l'état de la technique représenté à la figure 2, un joint 6 est fixé de manière rigide au support 3 et entre directement en contact avec le boisseau 1. Ceci peut générer la présence de quelques fuites dues au mauvais alignement des diverses pièces.

La solution selon la présente invention est présentée sur les figures 3a et 3b. Elle consiste à proposer un joint 6 disposé sur le support 3, qui dans le cas présent est mobile par rapport au boisseau, et maintenu dans celui-ci par l'intermédiaire d'un épaulement 4. Cet épaulement 4 permet de créer une cavité 8 dans laquelle se positionne le joint 6. Les dimensions de l'épaulement 4 et donc de la cavité 8 sont telles que lorsque la vanne est ouverte (figure 3a), il existe un jeu axial α et un jeu radial β dans le positionnement dudit joint 6 au niveau de la cavité 8. Le jeu axial α définit la distance entre la surface de contact plane A du joint 6 et la surface de contact plane A' du support 3 lorsque la vanne est ouverte. Le jeu radial β définit la distance entre la surface de contact C du joint 6 et le bord supérieur C' de la cavité 8 lorsque la vanne est ouverte.

La fermeture de la vanne s'effectue par rotation du boisseau mobile 1 jusqu'à ce que le boisseau 1 entre en contact avec le joint 6 de la vanne ainsi que représenté à la figure 3b.

Grâce à ce jeu axial α et ce jeu radial β au niveau de l'épaulement 4, le joint 6 peut alors s'auto-centrer sur la portée B' du boisseau 1 tout en se déplaçant parallèlement à la surface de contact A'.

La vanne permet ainsi d'assurer un recouvrement optimal entre la surface de contact B du joint 6 et la surface de contact B' du boisseau mobile 1. Il permet donc de réaliser une obturation étanche du conduit d'écoulement, même si l'alignement des différentes pièces du système n'est pas parfait.

Grâce à l'existence de ce jeu axial α et de ce jeu radial β au niveau de l'épaulement 4, le joint 6 utilisé dans cette vanne peut être un joint métallique, céramique ou encore polymère à faible coefficient de déformation.

Selon une variante de la présente forme d'exécution préférée, le support de joint 3 est fixe. On a alors une situation analogue à celle décrite dans la figure 3a (vanne ouverte) et 3b (vanne fermée), mais où il n'y a pas de jeu axial α. Le joint est constamment maintenu contre la surface de contact A' du support 3 (A = A'). Il peut cependant également s'auto-centrer sur la portée B' du boisseau 1 lors de la fermeture de la vanne, grâce au jeu radial β prévu au niveau de la cavité 8, en se déplaçant parallèlement à la surface de contact A'.

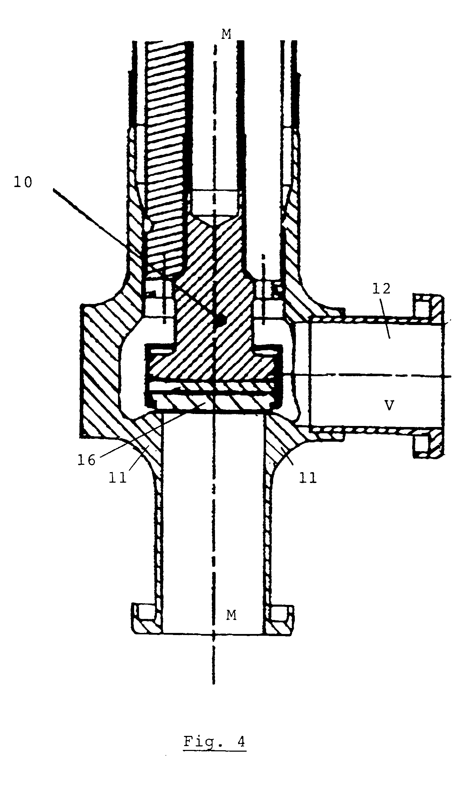

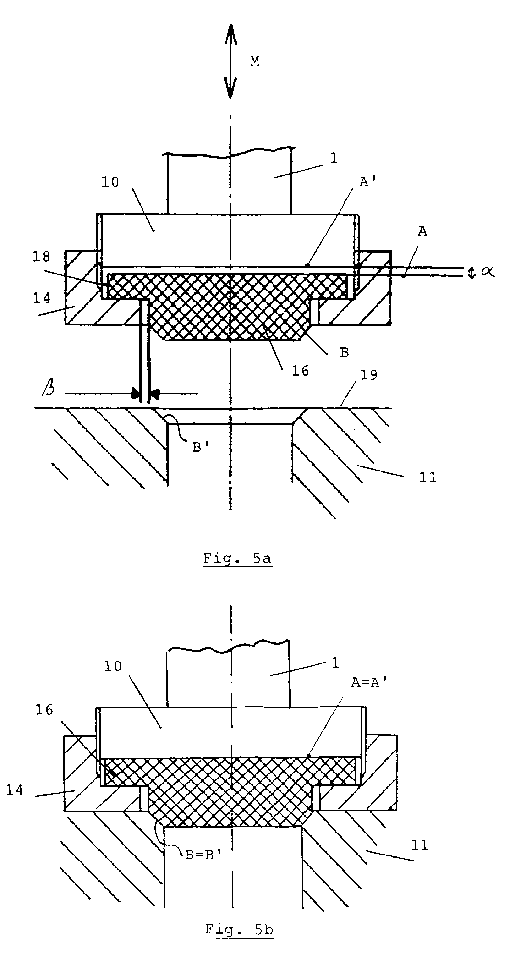

Selon une seconde forme préférée de l'invention, la vanne est une vanne à clapet telle que représentée aux figures 4, 5a et 5b. La vanne permet de régler l'écoulement du fluide entre la partie amont M et la partie aval V du conduit d'écoulement 12.

Le clapet 10 constitue essentiellement le support mobile sur lequel est disposé le joint d'étanchéité 16.

Selon la présente forme d'exécution de l'invention, représentée plus en détail aux figures 5a et 5b, un joint 16 présente à une de ses extrémités une première surface qui est la surface active, qui va entrer directement en contact avec le siège 11 de la vanne.

A l'extrémité opposée, une surface de contact plane A du joint 16 est tournée vers la surface de contact plane A' au niveau de l'extrémité active du support mobile 10 constituant le clapet. A son extrémité active, le joint 16 possède en outre une surface de contact éventuellement conique B tournée vers la surface de contact éventuellement conique B' située au niveau de l'extrémité supérieure du siège 11. Le joint 16 est rendu solidaire du support mobile 10 par l'intermédiaire d'un épaulement 14 fixé au support mobile 10. Cet épaulement 14 forme, avec la surface de contact plane A' située à l'extrémité du support mobile 10 une cavité 18 dans laquelle se positionne le joint 16. Les dimensions de l'épaulement 14 et donc de la cavité 18 sont telles que, lorsque la vanne est ouverte (figure 5a), il existe un jeu axial α et un jeu radial β dans le positionnement du joint 16 au niveau de la cavité 18. Le jeu axial α définit la distance entre la surface de contact plane A du joint 16 et la surface de contact plane A' du support mobile 10 lorsque la vanne est ouverte. Le jeu radial β définit la distance entre le corps cylindrique du joint 16 et l'extrémité de l'épaulement 14 en regard du joint.

La fermeture de la vanne s'effectue par pression sur le support mobile 10 du clapet qui descend dans le conduit d'écoulement de manière telle que le joint 16, par sa surface B, entre en contact avec la surface B' (figure 6b).

Grâce au jeu axial α et au jeu radial β, au niveau de l'épaulement 14, le joint 16 peut alors s'auto-centrer sur la surface de contact conique B' du siège 11 de la vanne en se déplaçant parallèlement à la surface de contact plane A' du support mobile 10.

Lorsque le support mobile 10 est posé sur le siège 11, un léger jeu (non dessiné) subsiste entre la surface plane 19 du siège et la surface de l'épaulement 14 en regard, de sorte que le support mobile 10 porte effectivement sur le siège uniquement au niveau du joint 16 (surfaces B et B').

La vanne permet ainsi d'assurer un recouvrement optimal entre la surface de contact conique B du joint 16 et la surface de contact conique B' située à l'extrémité du siège 11. Il permet donc de réaliser une obturation étanche du conduit d'écoulement, même si l'alignement des différentes pièces du système n'est pas parfait.

Grâce à l'existence de ce jeu radial et de ce jeu axial, le joint 16 utilisé dans cette vanne peut être un joint métallique ou céramique ou encore un joint en polymère à faible coefficient de déformation.

De même, le dispositif selon la présente invention peut être utilisé dans des conditions extrêmes telles que des températures extrêmement basses, des températures extrêmement élevées, des pressions élevées ou très élevées ou encore.

La vanne selon la présente invention peut également être utilisé pour régler l'écoulement de fluides agressifs.

## Revendications

1. Vanne (1) comprenant un joint d'étanchéité (6,16) disposé sur un support (3,10), caractérisée en ce que le joint (6,16) est maintenu dans un épaulement (4,14) dimensionné de manière à permettre un jeu axial (α) et/ou radial (β) dudit joint (6,16) lors de son positionnement sur le support (3,10) lorsque la vanne (1) est ouverte.

2. Vanne selon la revendication 1, caractérisée en ce qu'elle est une vanne à boisseau sphérique.

3. Vanne selon la revendication 2, caractérisée en ce que, le support (3) étant mobile, un jeu axial (α) et un jeu radial (β) sont prévus afin de permettre au joint (6) de s'auto-centrer sur la surface de contact sphérique (B') du boisseau en se déplaçant parallèlement à la surface plane (A') dudit support mobile (3) lors de la fermeture de vanne (1).

4. Vanne selon la revendication 2, caractérisée en ce que, le support (3) étant fixe, un jeu radial (β) est prévu afin de permettre au joint (6) de s'auto-centrer sur la surface de contact sphérique (B') du boisseau en se déplaçant parallèlement à la surface plane (A') dudit support fixe (3) lors de la fermeture de vanne (1).

5. Vanne selon la revendication 1, caractérisée en ce qu'elle est une vanne à clapet.

6. Vanne selon la revendication 5, caractérisée en ce qu'un jeu radial (α) et un jeu axial (β) sont prévus afin de permettre au joint (16) de s'auto-centrer sur la surface de contact conique (B') du siège (11) de la vanne (1), en se déplaçant parallèlement à la surface plane (A') dudit support mobile (10) lors de la fermeture de ladite vanne (1).

7. Vanne selon l'une quelconque des revendications précédentes, caractérisée en ce que le joint (6,16) est réalisé en une matière présentant un faible coefficient de déformation tel qu'un joint métallique, céramique ou un joint en polymère à faible coefficient de déformation.

8. Utilisation d'une vanne selon l'une quelconque des revendications précédentes dans des conditions extrêmes telles que températures extrêmement basses, températures extrêmement élevées, pressions élevées ou très élevées ou encore en présence de fluides agressifs.
